# EUROPEAN PATENT SPECIFICATION

(11) **EP 1 766 981 B1**
(45) Date of publication and mention of the grant of the patent: **14.10.2009**
(21) Application number: 04742155.7
(22) Date of filing: 01.07.2004
(51) Int. Cl.: H04N 7/24

(54) **A METHOD AND A DEVICE FOR TRANSFERRING PREDICTIVE AND NON-PREDICTIVE DATA FRAMES**
VERFAHREN UND EINRICHTUNG ZUM TRANSFER PRÄDIKTIVER UND NICHTPRÄDIKTIVER DATENRAHMEN
PROCEDE ET DISPOSITIF PERMETTANT LE TRANSFERT DE TRAMES DE DONNEES PREDICTIVES ET NON PREDICTIVES

(43) Date of publication of application: 28.03.2007
(73) Proprietor: OY Gamecluster Ltd, 00180 Helsinki (FI)
(72) Inventor: SALLINEN, Sami, FIN-02230 Espoo (FI); PIEHL, Erik, FIN-02750 Espoo (FI)
(74) Representative: Brax, Matti Juhani
(86) International application number: PCT/FI2004/000412
(87) International publication number: WO 2006/003232

(56) References cited:
- EP-A2- 0 614 186
- EP-A2- 1 443 770
- US-B1- 6 546 013
- US-B1- 6 680 944

## Description

### FIELD OF THE INVENTION

The present invention relates generally to communication systems. In particular the invention concerns digital broadband systems such as Digital Video Broadcasting (DVB) technology and video coding applied therein.

### BACKGROUND OF THE INVENTION

Digital Video Broadcasting (DVB) term refers to a number of standards defining digital broadcasting techniques that utilize satellite (DVB-S), cable (DVB-C), or terrestrial (DVB-T) distribution media. Such standards cover source coding, channel coding, conditional access (PayTV and related data scrambling solutions), and various other issues. In the early 1990's a specific DVB Project was established by major European public and private sector organizations in the television sector to create a framework for the introduction of MPEG-2 (Moving Picture Experts Group) audio/video compression standard into digital television services. The DVB project has steadily raised its popularity and worldwide adoption thereof is already on hand.

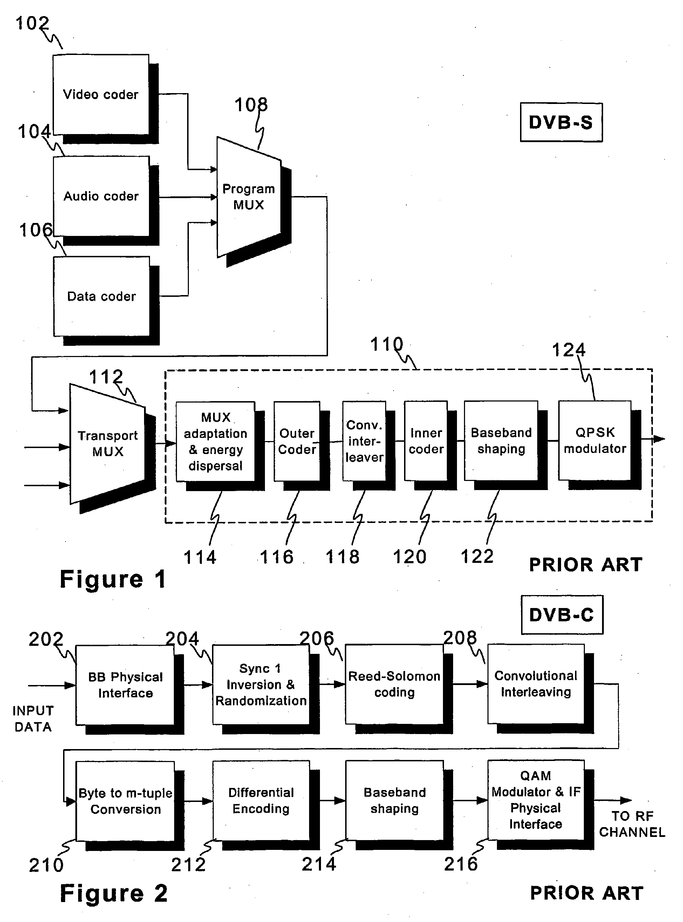

For satellite connections the DVB standard [1] defines transmission system as depicted in figure 1. It adapts intra-service 108 and inter-service 112 multiplexed base band (including video 102, audio 104, and possibly data 106) signals to a satellite channel during a number of processing steps collectively named herein as a satellite channel adapter, see dotted line with reference sign 110. The source coding has been generally applied to said signals in accordance with reference [2].

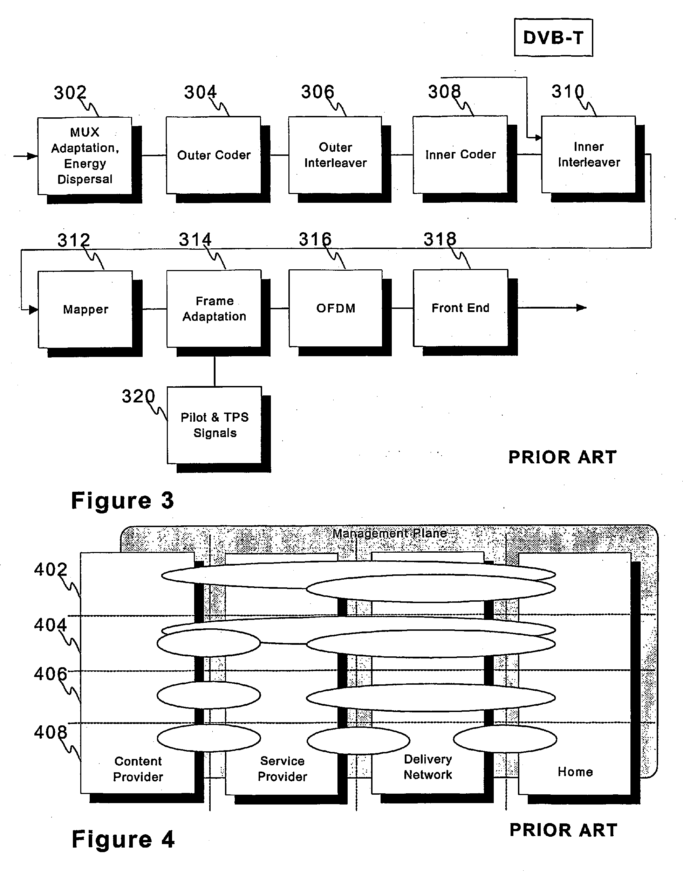

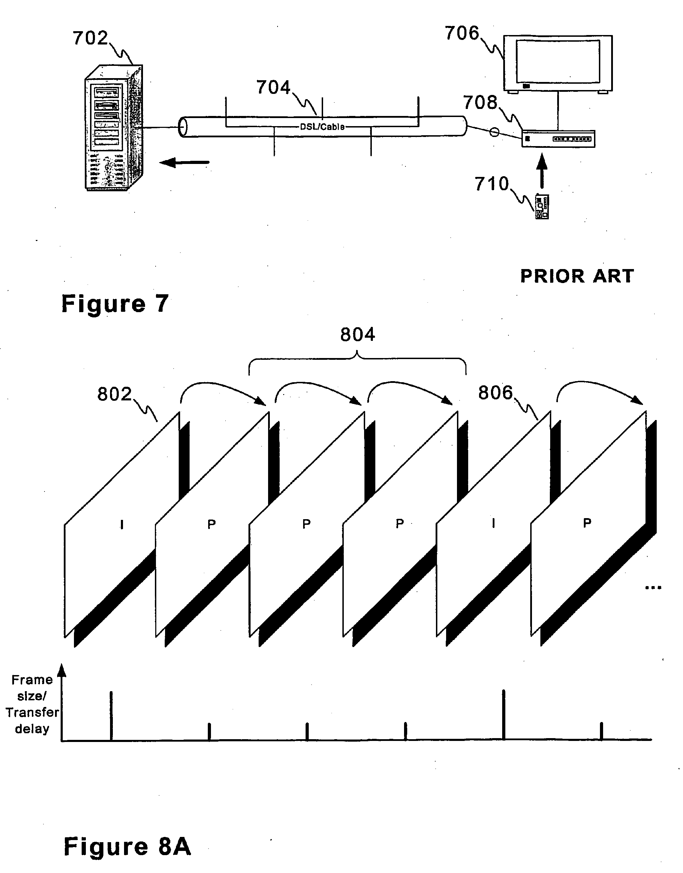

The following processes are applied to the data stream:
- transport multiplex adaptation and randomization for energy dispersal 114,
- outer coding (i.e. Reed-Solomon block codes) 116,
- convolutional interleaving 118,
- inner coding (i.e. punctured convolutional code) 120,
- baseband shaping for modulation 122, and
- modulation 124.
   Further details about DVB-S transmission can be found in reference [1] and cited publications therein.
   Respectively, considering cable transmission of digital video signals, document [3] describes DVB-C components and features thereof. Figure 2 discloses main functional blocks of sending direction in a cable system. BB interface block 202 adapts the input signal to the MPEG-2 transport layer framing structure (fixed length packets) with sync bytes. During sync inversion and randomisation 204 so-called Sync 1 byte is inverted and the data stream is randomised to ensure a sufficient number of transitions to occur in the signal for easier synchronization etc. Thereafter the randomised transport packets are subjected to Reed-Solomon FEC (Forward-Error Correction) coding 206 to retrieve a codeword for error detection and correction. The error-protected transport packets are then interleaved with a convolutional interleaver 208, meanwhile the actual convolutional coding as in DVB-S is not utilized at all. In step 210 the interleaved bytes are transformed into QAM (Quadrature Amplitude Modulation) symbols (m-tuple) after which differential coding 212 is applied to a number of most significants bits (MSB) in each symbol. Baseband shaping 214 includes mapping of m-tuples to I and Q signals followed by square-root raised cosine type filtering. Final stage, QAM modulation 216 of the signal has 16, 32, 64, 128, or 256 points in the constellation diagram. The modulated signal is then emitted to the physical interface being a radio frequency cable channel in this case.
   As a third alternative, figure 3 discloses an overview of the DVB-T system parts. Within MUX adaptation/Energy dispersal 302 block the signal is organized in packets (1 sync byte, 187 MPEG-2 data bytes) and randomised for energy dispersal. Next, outer coding block 304 includes Reed-Solomon coding of the input packets for error protection. Then, outer interleaving 306 is introduced to the error-protected packets. The interleaved data is then directed to a convolutional coder, inner coder 308 with several possible puncturing rates. Inner interleaving 310 phase includes both bit-wise and (OFDM) symbol-wise interleaving stages for input of one or two, see dotted arrow, bit streams. For further information refer to "hierarchical mode" in publication [4]. During mapping 312 the data stream is mapped to the constellation space. When frame adaptation 314 takes place, the signal is organized in frames of 68 OFDM symbols. In addition to data, the OFDM frames include pilot and TPS 320 (Transmission Parameter Signalling) signals for frame synchronization, channel estimation etc. Finally the signal is OFDM modulated 316 (with a plurality of carriers) and D/A converted to analogue form after which the analogue signal is driven out to the air interface through front end 318.
   Due to the tremendous success encountered by the Internet during the 1990's an additional model for providing DVB services in this case over IP (Internet Protocol) networks has been recently created, see specification [5]. It obviously was a tempting idea to utilize already existing data networks for transferring also DVB data without further need to invest in new hardware etc. DVB services over IP have been described with reference to a common type layer model disclosed in figure 4. Dotted lines represent interfaces between different domains (horizontal separation) and layers (vertical separation). Darkened background element, management plane, can be used for general management and control purposes. Content provider is an entity or a number of entities providing the clients (∼subscribers) with the information flow, notice the elliptical patters for visualizing the flow, to be actually physically transferred by a service provider over a delivery network being transparent to the IP traffic. Tasks of the content provider may include, for example, authentication/authorization services, service portals maintenance, service offering, service discovery mechanisms, metadata services, actual content services etc. Respectively, service provider (e.g. ISP service provider) tasks may include addressing services, authentication/authorization services, naming services (DNS etc), basic IP connectivity service, session control means, service accounting, and a number of various value added services like firewalls, caches etc. It's completely possible though that the content and service aspects are in practise offered and technically implemented by a single entity only. Home domain is the domain where the DVB services are consumed. It may refer to one or more terminal devices in a single network or, alternatively, to a number of networks including a number of devices.
   As to the different layers of figure 4, physical layer 408 includes the lowest-level interfacing means to transfer data between the ends of a communications link. It determines e.g. connector shapes and sizes, "bit" definitions and synchronization aspects in relation to, for example, voltage levels and different time durations or other physical magnitudes. Reference numeral 408 also refers to link layer that takes care of media access control functions like addressing, and optionally error control, flow control, and re-transmission of defectively received data packets. Network layer 406 handles routing, packet segmentation/re-assembly etc functions relating to the whole end-to-end connection in question. In the case of IP networking such routing means addition of necessary IP addresses to sent packets. In principle, network layer 406 does not have to be aware of lower level physical/link 408 layers. Transport layer to which is likewise referred by collective reference sign 406 herein performs end-to-end type flow and error control functions and multiplexes a plurality of different services utilizing just a single IP link, for example. Multiplexing can be implemented by a plurality of different port numbers etc. Considering especially IP networks popular choices for a transport layer protocol are UDP (User Datagram Protocol) and TCP (Transmission Control Protocol) the latter of which provides also error detection/control on top of mere multiplexing. Session layer 404 sets-up and releases connections for applications' use. Application layer 402 includes applications and API(s) for interfacing them. In DVB context application layer 402 is specifically named as MHP (Multimedia Home Platform). Within the home domain IP traffic for DVB services can be carried over, for example, common Ethernet (e.g. 100BASE-T) [6] or IEEE 1394 [7] physical/network layer technologies.
   The DVB data encapsulated in IP packets can be either multicast or unicast to the subscribers depending on the service. For example, IP multicast can be used for PayTV type transfer and IP unicast for video/audio on demand type service. To retrieve more information about DVB in the context of IP networking, one shall revert to reference [5] and cited publications.
   One of the most crucial decisions made at a time relates to the selected source coding method. MPEG-2 is a powerful aggregate of video and audio coding methods that utilize a number of different compaction techniques with remarkably high compression ratios with one major downside; the used compression methods are lossy, i.e. some data is irrevocably lost during the encoding process. Without such sacrifice the achievable compaction ratios (now typically from 1:6 to 1:30 etc) would not be near as impressive, as being obvious though. MPEG-2 coding also requires a considerable amount of processing, which, however, is generally not a problem with modern high performance processors anymore.

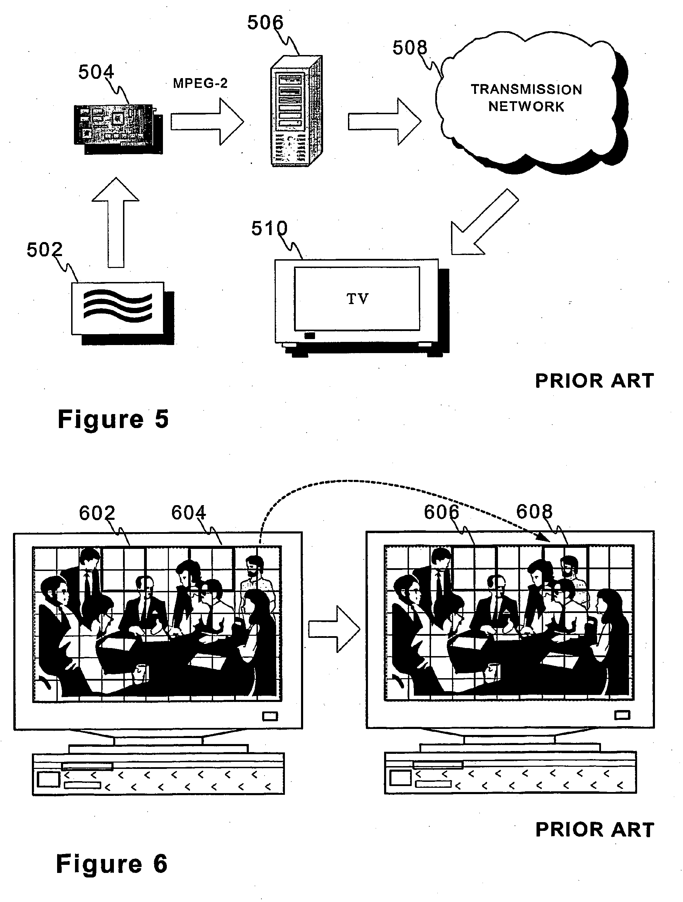

   Figure 5 discloses a generic process of encoding audio/video signal 502 with an MPEG-2 compliant encoder 504 producing standardized MPEG-2 stream as output. Audio/video server 506 receives and stores the encoded data stream, and eventually transmits it over transmission network 508 to receiver 510, e.g. a DVB set-top box connected to a television or a DVB IRD (Integrated Receiver Decoder) card installed therein, comprising necessary software/hardware means for decoding the stream for exploitation.
   MPEG type coding shares some parts with a common still picture compression format JPEG that utilizes characteristics of human vision and extracts normally invisible and in that sense unnecessary information from a source picture during the encoding process. Encoding stage exploits e.g. Discrete Cosine Transform (time->frequency transformation) and entropy coding. High frequency changes in picture colour can be more easily omitted from the coded signal than high frequency luminance (brightness) changes to which the human eye is more sensitive. In addition to intra-frame (∼intra-figure) aspects, MPEG exploits also temporal redundancy, i.e. static portions in consecutive video frames do not have to be coded for every frame; eventually, a content change within a certain area triggers sending of coded version thereof.
   In MPEG, each pixel in a figure is parameterised with luminance/brightness value (Y) and two color vectors (U, V). Pixels are then grouped together to form blocks and groups of blocks called macro-blocks. Blocks shall be converted into frequency domain by utilizing DCT that is rather similar to a common Fourier transform. DCT results a number of coefficients describing the cosine functions formed from the block with increasing frequency. From such coefficients the spatial information carried by the blocks can be later resolved by the decoding unit. DCT transform output is then effectively quantized and Huffman coded. In Huffman encoding different symbols consume a variable number of bits. Frequently used symbols consume fewer bits and less frequently used symbols more bits.
   Considering next some temporal aspects of MPEG coding, it's clear that in a video signal comprising a sequence of pictures referred to as frames hereinafter data contained in certain blocks may remain relatively unaltered for at least short period of time still extending to the duration of a plurality of subsequent frames. That certainly depends on the source signal characteristics; for example, news broadcast may include a clip wherein a newsreader sits with a desk and tells about what has been going on lately with the national economy. It's probable that the subsequent frames include changes between them mostly in the blocks near the narrator's facial area, meanwhile the background comprising a wall with paintings/posters etc stays unchanged; probably also camera movements are minimal in this kind of informative program. On the contrary, a fight scene in a modem action movie hardly contains any fixed portions between a larger number of subsequent frames to say at least.
   Therefore, some blocks can be occasionally predicted on the basis of blocks in previous frames. Frames that contain these predicted blocks are called P-frames. However, to reduce the detrimental effect of transmission errors and to allow (re)-synchronization to the coded signal, also complete frames that do not rely on information from other frames are periodically transmitted (few times a second). These in many ways crucial stand-alone frames are named intra-coded or I-frames. I-frames are likewise needed, when a service subscriber starts receiving the service stream for a first time or at least after a pause, and the receiver thus lacks the necessary data history for constructing valid decoded frames on the basis of mere differential data, for example. Bi-directional frames utilizing information both from prior and following frames are called B-frames.
   The above process is taken further by encoding motion vectors such that only portions of a picture that move or can be borrowed from other locations in previous frames of the video are encoded using fewer bits. Four 8x8 pixel blocks are grouped together into 16x16 macroblocks. Macroblocks that do not change are not re-encoded in subsequent frames. With P-frames, the encoder searches the previous frame (or frames before and after in the case of B-frames) in half-pixel increments for other macroblock locations that are a close match to the information contained in the current macroblock. If no adequately matching macroblocks are found in the neighbouring region, the macroblock is intra-coded and the DCT coefficients are fully encoded. If an adequate match is found in the search region, the full coefficients are not transmitted, but a motion vector is instead used to point to the similar block(s).
   Spatial and temporal sides of MPEG coding are depicted in figure 6 wherein two totally imaginary subsequent frames are coded in a computer equipped with an MPEG video encoder. Macroblocks 602 and 606 corresponding to a same location in the signal source contain practically identical data in both the frames and encoding thereof may thus be omitted (in P frames). Macroblocks 604 and 608, to the opposite, have a changing element, caused by a man walking by in otherwise static meeting scenario, and have to be re-encoded. However, as the encoding-causing element, the walking man, merely moves in the figure and its shape stays intact, motion vectors can be cleverly utilized in order to determine in the rightmost more recent frame a reasonable match with a macroblock in the previous frame on the left, see the dotted arrow highlighting this.
   Respectively, MPEG audio coding utilizes certain distinct properties of human hearing like auditory masking effect. Both temporal and spatial (in frequency plane) aspects are considered with impressive 1:10 compression ratios achievable again with only minor, if any, perceptible degradations in the decoded signal. MPEG-2 has five channels for directional audio and a special low-frequency channel. Moreover, the encoded signal may also encompass a plurality of alternative language channels.
   As the mammoth MPEG-2 standard includes a somewhat large number of different video and audio modes, the preferred level of adoption especially in case of DVB services is determined in reference [8] to facilitate the hardware manufacturers' tasks as to the compatibility issues inevitably rising in otherwise a bit too diverse context.
   To provide the subscribers of DVB services with an option to really affect the service delivery (service subscription/selection, service parameters adjustment), a return channel for carrying out such tasks must be established. In DVB the interaction specifications have generally been split into two sets. One is network-independent and can be regarded as a protocol stack extending approximately from ISO/OSI layers two to three (see [9]) whereas the second group of DVB specifications relates to the lower layers (approximately one to two) of the ISO/OSI model and therefore specifies the network-dependent tools for interactivity. For example, the DVB Return Channel through Cable specification (DVB-RCC), see reference [10], is available for the purpose as well as the other specifications for fixed/cellular telephone interactivity and even satellite interactive systems. In case of IP networks, standard IP unicast can be used for interaction with a service/content provider. DVB Project web site http://www.dvb.org/ can be visited to find listings about available DVB related documentation.
   However, notwithstanding the various existing data transfer arrangements for delivering DVB service or control data, situations may still occur in which the currently available resources do not suffice for achieving acceptable transfer times. For example, services like real-time games require short response times for providing the subscriber with a reasonable gaming experience. A gaming scenario is depicted in figure 7 where a service provider has game server 702 transmitting game information to one or more subscribers via a DSL or cable network 704 acting as a delivery network. At receiver side, set-top box 708 receives and decodes the service data and forwards it to a TV receiver or monitor 706 for visualization. Remote control 710 may be used for controlling the local devices or sending service related control instructions/requests/feedback (notice the arrows) to server 702 over the aforesaid delivery network 704 or some other optional transfer path available for such purpose. The overall delay sensed by the subscriber while utilizing the service consists of a plurality of issues, few more obvious ones of which to be issued being source data encoding time, transmission delay (may be asymmetric in relation to transfer directions depending on the used connection type), decoding delay, additional safety buffer delays, etc. As mentioned hereinbefore, coded MPEG-2 stream typically includes a number of different frame types and the ones (I-frames) without differential nature naturally being larger in size than the predictive counterparts (P-frames). Respectively, due to an increase in frame size, also transfer and the following buffering delays shoot up; I -frame with triple the size of the corresponding P-frame will correspondingly take three times longer to be transferred over the network. Varying transfer times between different types of frames reflect negatively on the usability of interactive services. One solution for reducing the transfer delay introduced by I -frames is to cut down the size thereof by reducing the picture quality (by increasing quantization etc) in encoded frames. However, that's typically not a feasible option, as the user may perceive the reduced picture quality, even if still somehow adequate, as reduced overall quality of service.
   A US patent 6,546,013 discloses variable rate multiplexer devices that, by definition, have a variable output rate for bits of information encoded therein. As a result necessary time sync information such as program clock reference information cannot be guaranteed to be delivered within the time interval thresholds mandated by certain industry broadcast standards, such as MPEG-2 and digital video broadcast ("DVB"). Transmission of reference signals, such as PCR information, may be assured by inserting detection means to detect the time interval between occurrences of the reference signal. If the interval between occurrences of the reference signal exceeds a predetermined time interval threshold, the detection means will instruct a memory device to provide a reference signal, which is then imprinted with reference signal information and inserted into the stream of information being output by the multiplexer. Alternatively, the multiplexer may simply provide an output signal at a preset predetermined time intervals, regardless of whether or not a reference signal is being provided by the input stream. In this embodiment, the output signal may occur substantially more frequently than is required by the time interval threshold of the relevant broadcast standard.

### SUMMARY OF THE INVENTION

The object of the present invention is to alleviate the defects found in prior art solutions as to the transfer delay of interactive services from a user's perspective. The object is met by changing the transmission of "complete", temporally non-predictive data frames, the complete data frames being especially important as they include substantially all the necessary data to construct a picture or other data element at the receiver without predictive components utilizing also previous or future frames for the purpose, to be based on demand only; for example, at service start-up when the user starts receiving the service data, one non-predictive frame is transferred to a recipient for initialising the decoder and for enabling successful decoding without any history information. Moreover, similar need for transmitting a non-predictive frame may occur in case of various error situations, i.e. the receiver has not been able to properly re-produce the data at the receiving end due to transmission or buffering error etc. In accordance with the basic concept of the invention the receiver shall analyse the received service data stream and on occurrence of aforesaid error situation inform the data provider like a game server through the return channel about the need to receive a new non-predictive frame.

Clearly, exploitation of the above arrangement is most useful in scenarios where data source like a server substantially codes in real time the service data for a single recipient. Considering typical use cases of traditional DVB services (ordinary television broadcast etc) with possibly hundreds of thousands or even millions of simultaneous users the non-predictive frames like I-frames cannot be cleverly provided in accordance with invention as the subscribers just entered into a certain channel and started service reception must be provided with a non-predictive frame as fast as possible to guarantee rapid synchronization to the signal and by that sense, tolerable service start-up time. Therefore, transmission of unicast type interactive service data requiring low delays would benefit most from using the suggested solution. Such services include e.g. real-time action games that may tolerate only tens of milliseconds of two-way transfer delay in the worst case.

The utility of the invention arises from the fact that the average transfer delay of service data is reduced thus enhancing the user experience at the receiving end. Depending on the used data coding technique, even the coding/decoding delay may be cut down by putting more emphasis on predictive coding over non-predictive coding, the latter of which could in some cases at least occasionally require more processing power directly affecting the processing time and delay. This approach may apply to scenarios in which only minor, if any, changes are present between the consecutive frames and the required processing for creating a differentially encoded frame is dependent on and typically decreases with the similarities between the adjacent frames. Respectively, some transmission capacity is released for other purposes. Although the invention is described herein by referring to the provision of interactive services utilizing especially DVB technology/equipment, particularly DVB-C and DVB over IP, both with MPEG-2 source coding, also other digital broadband and/or broadcast systems with substantially similar characteristics may gain from using it. For example, coding methods like MPEG-1, MPEG-4, H.263 and H.264 utilize an I-frame concept more or less similar to the one of MPEG-2, and thus it's obvious to a person of average skill that the invention could be exploited in systems using initially one of the above or corresponding coding methods.

In one aspect of the invention a method for transmitting compressed service data to a terminal equipment over a delivery network, service data stream including both predictive and non-predictive data frames of a common data type, the method comprising
- monitoring an occurrence of a predetermined event, whereupon transmitting a non-predictive data frame of said common type towards the terminal equipment in order to enable the terminal equipment to synchronize to the data stream, characterised by
- otherwise, transmitting solely predictive data frames of said common type in the service data stream towards the terminal equipment so that the non-predictive data frame is transmitted only upon the occurrence of the predetermined event.
   In the above, service data may be, for example, MPEG-2 based digital television service (DVB) data as discussed hereinbefore or some other data, and by terminal equipment it is referred to e.g. DVB IRD or "DVB set-top box" in more vernacular language. Data type refers to the nature of data, e.g. video (picture) frame data or audio data.
   In another aspect of the invention a method for receiving compressed service data transmitted by a data source over a delivery network, service data stream including both predictive and non-predictive data frames of a common data type, is **characterized in that** it comprises
- checking whether proper decoding of data stream is infeasible,
- if that is the case, indicating to the data source a need for receiving a new non-predictive data frame,
- otherwise, receiving solely the predictive data frames in the service data stream so that the non-predictive data frame is received only upon occurrence of the predetermined event.

In a further aspect of the invention, a device capable of receiving service data sent by a data source over a delivery network, and of transmitting data towards said data source, service data stream including both predictive and non-predictive frames of a common data type, said device comprising processing and memory means for processing and storing instructions and data, is **characterized in that** the device is configured to check whether proper decoding of the service data stream is infeasible, and if that is the case, to transmit an indication towards said data source in order to receive a new non-predictive data frame, otherwise the device is configured to receive solely the predictive data frames so that the non-predictive data frame is received only upon the occurrence of the predetermined event.

Yet in a further aspect, a device capable of transmitting service data over a delivery network to terminal equipment and receiving control information sent by the terminal equipment related to said service, service data including both predictive and non-predictive data frames of a common data type, said device comprising processing and memory means for processing and storing instructions and data, is **characterized in that** the device is configured to monitor an occurrence of a predetermined event, whereupon further configured to transmit a non-predictive frame of said common data type towards the terminal equipment in order to enable the terminal equipment to synchronize to the data stream, otherwise the device is configured to transmit solely the predictive frames in the service data stream towards the terminal equipment so that the non-predictive data frame is configured to be transmitted only upon occurrence of the predetermined event.

### BRIEF DESCRIPTION OF THE DRAWINGS

Hereinafter the invention is described in more detail by reference to the attached drawings, wherein
Fig. 1 depicts the DVB transmission system according to the DVB-S specification.
Fig. 2 depicts the DVB transmission system according to the DVB-C specification.
Fig. 3 depicts the DVB transmission system according to the DVB-T specification.
Fig. 4 illustrates the utilization of IP network as a delivery network of DVB service data.
Fig. 5 depicts a typical MPEG-2 transmission system.
Fig. 6 illustrates both spatial and temporal aspects of MPEG-2 source coding.
Fig. 7 depicts service delivery over DSL/cable network to a DVB set-top box capable of providing the service data source with feedback/control information.
Fig. 8A discloses a scenario in which non-predictive frames are transmitted periodically over the delivery network.
Fig. 8B discloses an inventive, alternative scenario wherein non-predictive frames are sent on demand only, whereas otherwise only predictive frames are produced.
Fig. 9 discloses an embodiment of the invention wherein terminal equipment comprises means for detecting a need for receiving a non-predictive frame and means for indicating such need to the data source.
Fig. 10 discloses a flow chart of the method (embodiment) of the invention.
Fig. 11 is a block diagram of a device capable of acting as a service data source of the invention.
Fig. 12 is a block diagram of a device capable of acting as a service data recipient of the invention.

### DETAILED DESCRIPTION OF THE EMBODIMENT OF THE INVENTION

Figures 1 through 7 were already described above in conjunction with the description of relevant prior art.

Figure 8A discloses a scenario for facilitating the further understanding of the solution of the invention including a sequence of consecutive MPEG-2 video picture frames, some of which being non-predictive I-frames 802, 806 and the rest, see collective sign 804, being predictive P-frames. The data stream is constructed by inserting a single I-frame after each block of three P-frames. Respectively, an I-frame may be sent as a response to the explicitly received request by the user equipment. The figure includes arrows representing the differential nature of P-frames, i.e. differences between the current video picture frame and the preceding video picture frame is determined, parameterised and transmitted as a P-frame over the delivery network. The receiver includes history information, e.g. a state machine, by utilizing which the differential and parameterised frame can be decoded and transformed again into a valid video picture frame to be visualized on a display in case of no data loss or transmission errors introduced to the data during the transmission phase. However, if the transmission of I-frames is not conditioned in any way but the I-frames are transferred automatically, e.g. periodically, instead, the scenario does not offer the benefit of reduced average transfer delay even if the feature of monitoring the service data stream and providing the data source with I-frame transmission requests is present, as the regularly transmitted I-frames still slow down the transfer (and reception) process in non-stop manner. Sizes of I- and P-frames, being only exemplary though, are shown in the figure below the corresponding frames. The transfer delay increases hand in hand with the frame size.

In real-time applications like action games the received data stream cannot be buffered for guaranteeing smooth playback as much as in the case of mere simple broadcast services like movie playback etc due to the easily growing user dissatisfaction with the non-responsive controls etc. If non-predictive frames like I-frames are regularly transmitted, the reception buffer still has to be longer than with pure predictive frames such as P-frames with smaller size and reduced transfer delay.

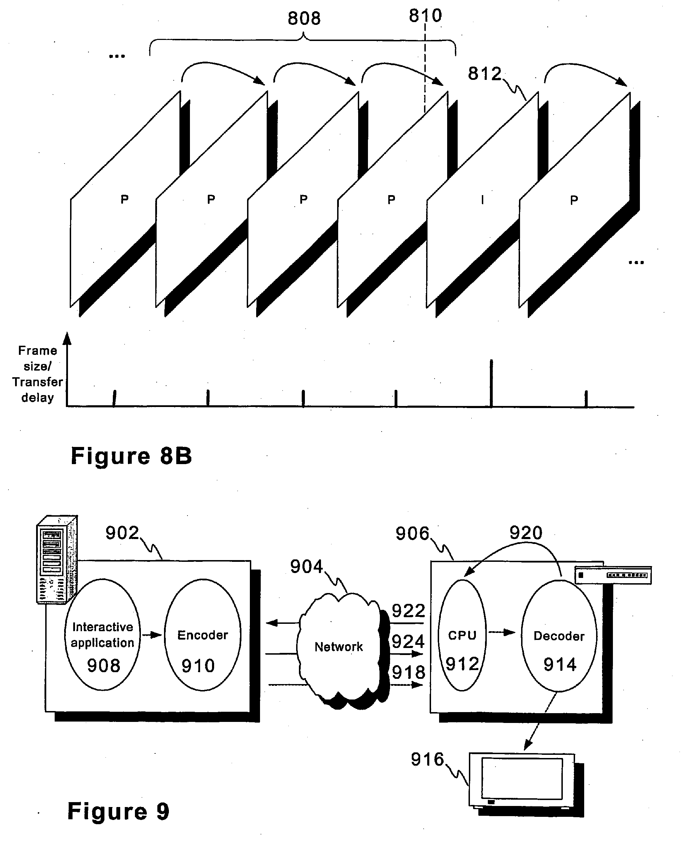

To overcome the disadvantageous effect of additional buffering or continuously varying frame rate at the reception side due to radically varying size of received frames, figure 8B discloses another, inventive example in which large I-frames 812 are transmitted only upon occurrence of a triggering event, see dotted vertical line 810, in other words "on demand", while rest of the time smaller sized predictive frames 808 are being transferred.

Figure 9 discloses an embodiment of the invention in which either external or integrated set-top box 906 of television set 916 comprises means, software and/or hardware, for checking and analysing the incoming service data stream, see dotted arrow 918, whether it can be properly decoded, or if it contains unrecoverable errors or even completely misses some necessary portions like P-frames. Subsequent P-frames following an erroneous or missing one cannot generally be then successfully decoded anymore. Said checking can be performed by traversing through the verifiable frame structures directly from the received data and optionally reviewing certain parameters (time code or other indexed information) included in the received data as such or calculated on the basis thereof, or by determining/comparing locally generated checksum values with received embedded values. Moreover, mere inspection of reception buffers may indicate a need to request for a new non-predictive I-frame. For example, buffer underflow in the reception buffer may be used to trigger sending I-frame request 922 over network 904, e.g. a wireless, cable, or IP network, to server 902 acting as a data source. Additionally, expiration of a data reception timer may be used to indicate data loss in the transmission path. Processing unit 912 may control the overall operation of set-top box 906 while decoder circuit/software 914 analyses the received stream and provides processing unit 912 with the necessary information 920 for further reception of data and transmission of I-frame requests etc.

Server 902 at its turn comprises means, again software and/or hardware, for receiving the I-frame requests or indications thereof and means for subsequently transmitting an I-frame to the set-top box. Interactive application 908 either resident in server 902 itself or at least connected thereto, provides the processing unit with data to be encoded 910 and delivered to set-top box 906. Correspondingly, also encoding of data may occur in an external coding device to which server 902 is connected. Upon receipt of indication 922 about a need to transmit a new I-frame, such frame is calculated from the data, encapsulated in necessary network transmission units and forwarded 924 to set-top box 906.

By utilizing only shorter predictive frames in service data stream transmission bar aforesaid special scenarios related to lost or erroneous frames, reception buffering may be minimized and the live picture about interactive service's status, e.g. game screen, be drawn on the display with lower delay. In the case of such special scenarios, the delay temporarily increases and the service user may sense intermittent degradation in service quality, but that's anyway what's going to happen in such a scenario, and the new I-frame will correct the situation and return the set-top box back to synchronization in relation to the subsequent predictive P-frames. After sending the I-frame on the basis of the current service status, server 902 advantageously continues sending P-frames logically continuing from the actual real-time situation. Thus, any mere correction type frames are preferably not sent between server 902 and set-top box 906 to avoid increase in the overall average delay.

I-frame request 922 may not have to be explicit in nature and also other type messages are possible for the purpose. Basically any kind of indication from which server 902 can deduct the need for sending an I-frame can be considered as sufficient. The indication can be a control or feedback message, or just included in those as an explicit or implicit parameter. Alternatively, the lack of reception of a specific acknowledgement for successful data reception at the far-end may be seen as the indication. For example, a timer with certain expiry time related to the monitoring period can be used to trigger the decision-making procedure in favour of the call for new I-frame transmission. In addition, the indication can be received from other elements as well, not just from set-top box 906. If e.g. a network element forwarding data in delivery network 904 has suffered from data loss/corruption due to over-flown buffers, it may indicate the error to the sender before set-top box 906 reacts to the situation.

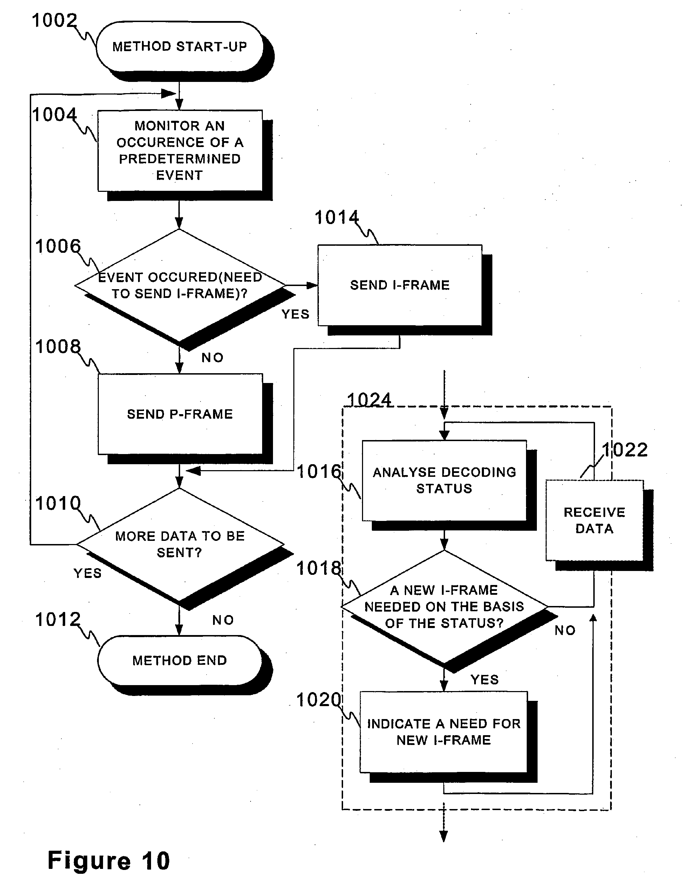

Figure 10 discloses one option for carrying out the method steps of the invention. At method start-up 1002 a device such as the aforementioned server functioning as a data source loads encoding, data transfer, and general control applications to the memory thereof, initialises required memory areas and variables, establishes necessary connections on the basis of e.g. received service requests, and starts delivering the service data comprising encoded data frames.

During phase 1004 the device monitors whether an event to trigger transmission of an I-frame has occurred or not since the previous monitoring round. Monitoring may be periodic and performed only at predetermined intervals, for example, or continuous and executed alongside with other functions. Such event may be, for example, parameter value/message indication of newly established connection because of which at least one I-frame should be sent to the recipient for initialisation and future interframe synchronization. Alternatively, a received message indicating need for receiving new I-frame at the far-end may be considered as an event of the intended type. If that really is the case, and a new I-frame should be transmitted instead of predictive P-frame, which is checked in phase 1006, the action of sending an I-frame is taken in phase 1014. Otherwise, a P-frame is transmitted in phase 1008. As long as data to be encoded and sent exists 1010, steps of checking the event occurrences and transmitting related frames are repeated until no more to send and the method execution is ramped down, see phase 1012.

The event is predetermined (events the occurrences of which are monitored could be stored in a list etc) in a sense that its occurrence can be recognized later during monitoring 1004 phase. Naturally the actual occurrences are not predetermined/predeterminable, as that would imply knowing the possible problem/error/service initiation or start-up situations beforehand.

Dotted line 1024 encircles method steps to be executed by a device at the receiving end such as a set-top box. The device shall receive 1022 encoded data related to a service. On the basis of received, encoded data or data ought to be received but got lost, and e.g. decoder state, analysis is performed 1016 on the current decoding status. If new I-frame is needed to be received in order to properly decode the data, which is checked in phase 1018, such need is indicated in phase 1020. Indicating may mean, for example, sending a specific message or including a specific parameter / parameter value in some more generic message to be sent towards the data source via the delivery network or some other available connection. Indication may also be the omission of sending a normal acknowledgement message etc other passive measure as described hereinbefore.

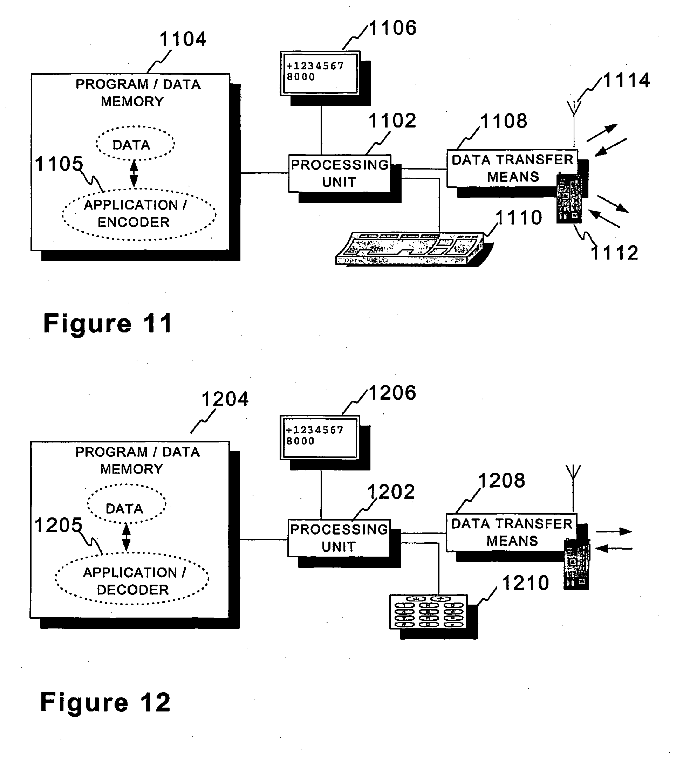

Figure 11 discloses a block diagram of basic components for a device such as a computer capable of acting as a server/data source for delivering encoded data with both predictive and non-predictive frames. Processing unit 1102 controls the execution of actions in accordance with instructions 1105 e.g. in a form of an application including data encoding routines stored in memory 1104. Memory 1104 may also comprise both uncoded and already encoded data frames in addition to required settings and other supplementary information. Data transfer means 1108 may include both wireless means 1114 like a radio/infrared transceiver and also wireless network (WLAN etc) adapters, or fixed (∼wired) means 1112 such as a conventional network adapter (Ethernet card etc), for example. Keyboard or other data input means 1110 and display 1106 are useful in providing a user with an interface for managing and controlling the device. Data encoder can be implemented through a specific encoder chip connected to the rest of the device in addition to mere software means.

Likewise, the device utilized in the invention for receiving encoded service data stream, a block diagram of which is shown in figure 12, comprises processing means 1202, memory means 1204 with decoder 1205, data transfer means 1208 that may be wireless and/or fixed capable of connecting the device both to the delivery network and to the return channel used for transmitting non-predictive frame requests. It optionally comprises display 1206 in addition to keypad 1210 for implementing a sufficient UI. Data decoder 1205 can be implemented through a specific decoder chip connected to the rest of the device in addition to mere software means.

In general, software for implementing the invention and method steps thereof can be delivered on a carrier medium such as a floppy, a CD-ROM, a memory card, a hard disk etc.

The protocols and protocol stacks utilized in service data transfer according to the invention can be selected from the existing ones as the transfer capabilities required for implementing the invention as such are not particularly complex or special, which can be seen as one benefit of the invention. The invention may be realized as an additional software/hardware module or a combination of both that is included or at least connected to the device.

It should be obvious to a one skilled in the art that different modifications can be made to the present invention disclosed herein without diverging from the scope of the invention defined by the claims. Likewise, utilized devices, methods steps and their mutual ordering, data formats etc may vary still converging to the basic idea of the invention.

### References:

[1] ETSI EN 300 421 V.1.1.2 Digital Video Broadcasting (DVB); Framing Structure, channel coding and modulation 11/12 GHz satellite services
[2] ISO/IEC DIS 13818-1 (June 1994); Coding of moving pictures and associated audio (MPEG-2)
[3] ETSI EN 300 429 V1.2.1 Digital Video Broadcasting (DVB); Framing structure, channel coding and modulation for cable systems
[4] ETSI EN 300 744 V1.4.1 Digital Video Broadcasting (DVB); Framing structure, channel coding and modulation for digital terrestrial television
[5] ETSI TR 102 033 V1.1.1 Digital Video Broadcasting (DVB); Architectural framework for the delivery of DVB-services over IP-based networks
[6] ETSI TS 102 814 V1.2.1 Digital Video Broadcasting (DVB); Ethernet Home Network Segment
[7] ETSI TS 102 813 V1.1.1 Digital Video Broadcasting (DVB); IEEE 1394 Home Network Segment
[8] ETSI ETR 154 Digital Video Broadcasting (DVB); Implementation guidelines for the use of MPEG-2 Systems, Video and Audio in satellite, cable and terrestrial broadcasting applications
[9] prETS 300 802 Digital Video Broadcasting (DVB); Network-independent protocols for DVB interactive services
[10] ETSI ES 200 800 V1.3.1 Interaction channel for Cable TV distribution systems (CATV)

## Claims

1. A method for transmitting compressed service data to a terminal equipment over a delivery network, service data stream including both predictive and non-predictive data frames of a common data type, the method comprising
- monitoring an occurrence of a predetermined event (1004), whereupon transmitting a non-predictive data frame of said common type towards the terminal equipment in order to enable the terminal equipment to synchronize to the data stream (1006, 1014), **characterised by**
- otherwise, transmitting solely the predictive data frames in the service data stream towards the terminal equipment (1008) so that the non-predictive data frame is transmitted only upon the occurrence of the predetermined event.

2. The method of claim 1, wherein said event is substantially at least one of the following: receipt of a non-predictive frame request or an indication thereof, lack of receipt of an acknowledgement message during the monitoring period, receipt of a message with a certain parameter indicating a need for transmitting a non-predictive frame, receipt of message with a parameter value indicating a need for transmitting a non-predictive frame, and establishment or initialisation of a data transfer connection.

3. The method of claim 1, wherein said service is substantially at least one of the following: a digital broadband service, a digital broadcast service, and a DVB (Digital Video Broadcasting) service.

4. The method of any of claims 1-3, wherein said compressed service data includes video picture data.

5. The method of claim 4, wherein said video picture data is substantially MPEG-2 (Moving Picture Experts Group) coded.

6. The method of claim 5, wherein said non-predictive frame is an I-frame.

7. The method of claim 5, wherein said predictive frame is a P-frame

8. A method for receiving compressed service data transmitted by a data source over a delivery network, service data stream including both predictive and non-predictive data frames of a common data type, **characterized in that** the method comprises
- checking whether proper decoding of data stream is infeasible (1016),
- if that is the case, indicating to the data source a need for receiving a new non-predictive data frame (1018, 1020),
- otherwise, receiving solely the predictive data frames so that the non-predictive data frame is received only upon the occurrence of the predetermined event.

9. The method of claim 8, wherein said checking includes at least one of the following: inspecting of a buffer status, inspecting an expiry of a timer, calculating a checksum value, verifying the received data structure, inspecting a parameter value included in or determined on the basis of the received data.

10. The method of claim 8, wherein said service is substantially at least one of the following: a digital broadband service, a digital broadcast service, and a DVB (Digital Video Broadcasting) service.

11. The method of any of claims 8-10, wherein said compressed service data includes video picture data.

12. The method of claim 11, wherein said video picture data is substantially MPEG-2 (Moving Picture Experts Group) coded.

13. A device capable (1208) of receiving service data sent by a data source over a delivery network, and of transmitting data towards said data source, service data stream including both predictive and non-predictive frames of a common data type, said device comprising processing (1202) and memory (1204) means for processing and storing instructions and data, **characterized in that** the device is configured to check whether proper decoding of the service data stream is infeasible, and if that is the case, to transmit an indication towards said data source in order to receive a new non-predictive data frame, otherwise the device is configured to receive solely the predictive data frames so that the non-predictive data frame is received only upon the occurrence of the predetermined event.

14. The device of claim 13, wherein said checking includes at least one of the following: inspection of a buffer status, inspection of an expiry of a timer, calculation of a checksum value, verification of the received data structure, and inspection of a parameter value included in or determined on the basis of the received data.

15. The device of claim 13, wherein said service is substantially at least one of the following: a digital broadband service, a digital broadcast service, and a DVB (Digital Video Broadcasting) service.

16. The device of any of claims 13-15, wherein said service data includes video picture data.

17. The device of claim 16, wherein said video picture data is substantially MPEG-2 (Moving Picture Experts Group) coded.

18. The device of claim 13 that is substantially at least one of the following: an IRD (Integrated Receiver Decoder), and a television set-top box.

19. A device capable (1108) of transmitting service data over a delivery network to terminal equipment and receiving control information sent by the terminal equipment related to said service, service data including both predictive and non-predictive data frames of a common data type, said device comprising processing (1102) and memory (1104) means for processing and storing instructions and data, **characterized in that** the device is configured to monitor an occurrence of a predetermined event, whereupon further configured to transmit a non-predictive frame of said common data type towards the terminal equipment in order to enable the terminal equipment to synchronize to the data stream, otherwise configured to transmit solely the predictive frames in the service data stream towards the terminal equipment so that the non-predictive data frame is configured to be transmitted only upon the occurrence of the predetermined event.

20. The device of claim 19, wherein said event is substantially at least one of the following: receipt of a non-predictive frame request or an indication thereof, lack of receipt of an acknowledgement message during a monitoring period, receipt of a message with a certain parameter indicating a need for transmitting a non-predictive frame, receipt of message with a parameter value indicating a need for transmitting a non-predictive frame, and establishment or initialisation of a data transfer connection.

21. The device of claim 19, wherein said service is substantially at least one of the following: a digital broadband service, a digital broadcast service, and a DVB (Digital Video Broadcasting) service.

22. The device of any of claims 19-21, wherein said service data includes video picture data.

23. The device of claim 22, wherein said video picture data is substantially MPEG-2 (Moving Picture Experts Group) coded.

24. The device of any of claims 19-23 that is substantially a server.

25. A computer program comprising code means to execute the method steps of claim 1 or 8.

26. A carrier medium carrying the computer executable program of claim 25.

## Patentansprüche

1. Verfahren zur Übertragung komprimierter Dienstdaten an eine Endeinrichtung über ein Delivery-Netzwerk, wobei der Dienstdatenstrom sowohl prädiktive als auch nichtprädiktive Datenrahmen eines gemeinsamen Datentyps enthält, wobei das Verfahren umfasst:
- Überwachung des Eintretens eines vorbestimmten Ereignisses (1004) und, falls das Ereignis eingetreten ist, Übertragen eines nichtprädiktiven Datenrahmens des gemeinsamen Datentyps an die Endeinrichtung, um eine Synchronisation mit dem Datenstrom durch die Endeinrichtung zu ermöglichen (1006, 1014), **dadurch gekennzeichnet, dass**
- anderenfalls lediglich die prädiktiven Datenrahmen im Dienstdatenstrom zur Endeinrichtung übertragen werden (1008), so dass die Übertragung des nichtprädiktiven Datenrahmens nur bei Eintreten des vorbestimmten Ereignisses erfolgt.

2. Verfahren nach Anspruch 1, bei welchem es sich bei dem Ereignis im wesentlichen um wenigstens eines der folgenden handelt: Empfang einer Abfrage eines nichtprädiktiven Rahmens oder eines Hinweises auf die Abfrage, Fehlen des Empfangs einer Quittungsnachricht während des Überwachungszeitraums, Empfang einer Nachricht mit einem bestimmten Parameter, welcher das Erfordernis einer Übertragung eines nichtprädiktiven Rahmens anzeigt, Empfang einer Nachricht mit einem Parameter-Wert, welcher das Erfordernis einer Übertragung eines nichtprädiktiven Rahmens anzeigt, und Errichten oder Initialisieren einer Datenübertragungsverbindung.

3. Verfahren nach Anspruch 1, bei welchem es sich bei dem Dienst im wesentlichen um wenigstens einen der folgenden handelt: ein digitaler Breitband-Dienst, ein digitaler Rundfunkdienst und ein DVB(Digital Video Broadcasting)-Dienst.

4. Verfahren nach einem der Ansprüche 1-3, bei welchem die komprimierten Dienstdaten Videobilddaten enthalten.

5. Verfahren nach Anspruch 4, bei welchem die Videobilddaten im wesentlichen gemäß MPEG-2 (Moving Picture Experts Group) codiert sind.

6. Verfahren nach Anspruch 5, bei welchem es sich bei dem nichtprädiktiven Rahmen um einen I-Frame handelt.

7. Verfahren nach Anspruch 5, bei welchem es sich bei dem prädiktiven Rahmen um einen P-Frame handelt.

8. Verfahren für den Empfang von komprimierten Dienstdaten, welche von einer Datenquelle über ein Delivery-Netzwerk übertragen werden, wobei der Dienstdatenstrom sowohl prädiktive als auch nichtprädiktive Datenrahmen eines gemeinsamen Datentyps enthält, **dadurch gekennzeichnet, dass** das Verfahren umfasst:
- Prüfen, ob eine richtige Decodierung des Datenstroms undurchführbar ist (1016),
- falls dies der Fall ist, der Datenquelle anzeigen, dass der Empfang eines neuen nichtprädiktiven Datenrahmens erforderlich ist (1018, 1020),
- anderenfalls: Empfangen lediglich der prädiktiven Datenrahmen, so dass der nichtprädiktive Datenrahmen nur bei Eintreten des vorbestimmten Ereignisses empfangen wird.

9. Verfahren nach Anspruch 8, bei welchem das Prüfen wenigstens eine der folgenden Handlungen umfasst: Überprüfen eines Pufferspeicher-Status, Überprüfen eines Ablaufs eines Zeitgebers, Berechnen eines Prüfsummenwertes, Verifizieren der empfangenen Datenstruktur, Überprüfen eines Parameterwertes, der in den empfangenen Daten enthalten ist oder auf der Basis der empfangenen Daten bestimmt wird.

10. Verfahren nach Anspruch 8, bei welchem es sich bei dem Dienst im wesentlichen um wenigstens einen der folgenden handelt: ein digitaler Breitband-Dienst, ein digitaler Rundfunkdienst und ein DVB(Digital Video Broadcasting)-Dienst.

11. Verfahren nach einem der Ansprüche 8-10, bei welchem die komprimierten Dienstdaten Videobilddaten enthalten.

12. Verfahren nach Anspruch 11, bei welchem die Videobilddaten im wesentlichen gemäß MPEG-2 (Moving Picture Experts Group) codiert sind.

13. Einrichtung, die in der Lage ist (1208), Dienstdaten zu empfangen, die von einer Datenquelle über ein Delivery-Netzwerk versendet werden, und Daten an diese Datenquelle zu übertragen, wobei der Dienstdatenstrom sowohl prädiktive als auch nichtprädiktive Rahmen eines gemeinsamen Datentyps enthält, wobei die Einrichtung umfasst: Verarbeitungsmittel (1202) und Speichermittel (1204) für das Verarbeiten und Speichern von Befehlen und Daten, **dadurch gekennzeichnet, dass** die Einrichtung dazu ausgelegt ist, zu prüfen, ob eine richtige Decodierung des Dienstdatenstroms undurchführbar ist, und, falls dies der Fall ist, einen Hinweis an die Datenquelle zu übertragen, um einen neuen nichtprädiktiven Datenrahmen zu erhalten, und dass die Einrichtung dazu ausgelegt ist, anderenfalls nur die prädiktiven Datenrahmen zu empfangen, so dass der nichtprädiktive Datenrahmen nur bei Eintreten des vorbestimmten Ereignisses empfangen wird.

14. Einrichtung nach Anspruch 13, wobei das Prüfen wenigstens eine der folgenden Handlungen umfasst: Überprüfung eines Pufferspeicher-Status, Überprüfung eines Ablaufs eines Zeitgebers, Berechnung eines Prüfsummenwertes, Verifizierung der empfangenen Datenstruktur, Überprüfen eines Parameterwertes, der in den empfangenen Daten enthalten ist oder auf der Basis der empfangenen Daten bestimmt wird.

15. Einrichtung nach Anspruch 13, bei welcher es sich bei dem Dienst im wesentlichen um wenigstens einen der folgenden handelt: ein digitaler Breitband-Dienst, ein digitaler Rundfunkdienst und ein DVB(Digital Video Broadcasting)-Dienst.

16. Einrichtung nach einem der Ansprüche 13-15, bei welcher die Dienstdaten Videobilddaten enthalten.

17. Einrichtung nach Anspruch 16, bei welcher die Videobilddaten im wesentlichen gemäß MPEG-2 (Moving Picture Experts Group) codiert sind.

18. Einrichtung nach Anspruch 13, bei welcher es sich im wesentlichen um wenigstens eine der folgenden Einrichtungen handelt: einen IRD (Integrated Receiver/Decoder) und eine TV-Set-Top-Box.

19. Einrichtung, die in der Lage ist (1108), Dienstdaten über ein Delivery-Netzwerk an eine Endeinrichtung zu übertragen und den Dienst betreffende Steuerinformationen zu empfangen, die von der Endeinrichtung versendet werden, wobei die Dienstdaten sowohl prädiktive als auch nichtprädiktive Datenrahmen eines gemeinsamen Datentyps enthalten und wobei die Einrichtung Verarbeitungsmittel (1102) und Speichermittel (1104) zur Verarbeitung und Speicherung von Befehlen und Daten umfasst, **dadurch gekennzeichnet, dass** die Vorrichtung dazu ausgelegt ist, das Eintreten eines vorbestimmten Ereignisses zu überwachen, und weiterhin dazu ausgelegt ist, falls das Ereignis eingetreten ist, einen nichtprädiktiven Rahmen des gemeinsamen Datentyps an die Endeinrichtung zu übertragen, um eine Synchronisation mit dem Datenstrom durch die Endeinrichtung zu ermöglichen, und dazu ausgelegt ist, anderenfalls lediglich die prädiktiven Rahmen im Dienstdatenstrom an die Endeinrichtung zu übertragen, so dass der nichtprädiktive Datenrahmen nur bei Eintreten des vorbestimmten Ereignisses übertragen wird.

20. Einrichtung nach Anspruch 19, bei welcher es sich bei dem Ereignis im wesentlichen um wenigstens eines der folgenden handelt: Empfang einer Abfrage eines nichtprädiktiven Rahmens oder eines Hinweises auf die Abfrage, Fehlen des Empfangs einer Quittungsnachricht während eines Überwachungszeitraums, Empfang einer Nachricht mit einem bestimmten Parameter, welcher das Erfordernis einer Übertragung eines nichtprädiktiven Rahmens anzeigt, Empfang einer Nachricht mit einem Parameter-Wert, welcher das Erfordernis einer Übertragung eines nichtprädiktiven Rahmens anzeigt, und Errichten oder Initialisieren einer Datenübertragungsverbindung.

21. Einrichtung nach Anspruch 19, bei welcher es sich bei dem Dienst im wesentlichen um wenigstens einen der folgenden handelt: ein digitaler Breitband-Dienst, ein digitaler Rundfunkdienst und ein DVB(Digital Video Broadcasting)-Dienst.

22. Einrichtung nach einem der Ansprüche 19-21, bei welcher die Dienstdaten Videobilddaten enthalten.

23. Einrichtung nach Anspruch 22, bei welcher die Videobilddaten im wesentlichen gemäß MPEG-2 (Moving Picture Experts Group) codiert sind.

24. Einrichtung nach einem der Ansprüche 19-23, bei welcher es sich im wesentlichen um einen Server handelt.

25. Computerprogramm, umfassend Code-Mittel zur Ausführung der Verfahrensschritte nach Anspruch 1 oder 8.

26. Trägermedium zur Aufnahme des computerausführbaren Programms nach Anspruch 25.

## Revendications

1. Procédé pour transmettre des données de service compressées à un équipement terminal sur un réseau de distribution, le flot de données de service comprenant à la fois des trames de données prédictives et non prédictives d'un type de données commun, le procédé consistant à :
- surveiller une occurrence d'un événement prédéterminé (1004), auquel cas, émettre une trame de données non prédictive dudit type commun vers l'équipement terminal afin de permettre à l'équipement terminal de se synchroniser avec le flot de données (1006, 1014), **caractérisé en ce qu'**il consiste :
- autrement, à émettre seulement les trames de données prédictives dans le flot de données de service vers l'équipement terminal (1008) de sorte que la trame de données non prédictive n'est émise que lors de l'occurrence de l'événement prédéterminé.

2. Procédé selon la revendication 1, dans lequel ledit événement est sensiblement au moins l'un : de la réception d'une demande de trame non prédictive ou d'une indication de celle-ci, de l'absence de réception d'un message d'acquittement pendant la période de surveillance, de la réception d'un message avec un certain paramètre indiquant un besoin d'émettre une trame non prédictive, de la réception d'un message avec une valeur de paramètre indiquant un besoin d'émettre une trame non prédictive et de l'établissement ou l'initialisation d'une connexion de transfert de données.

3. Procédé selon la revendication 1, dans lequel ledit service est sensiblement au moins l'un : d'un service large bande numérique, d'un service de diffusion numérique et d'un service DVB (diffusion vidéonumérique).

4. Procédé selon l'une quelconque des revendications 1 à 3, dans lequel lesdites données de service compressées comprennent des données d'image vidéo.

5. Procédé selon la revendication 4, dans lequel lesdites données d'image vidéo sont sensiblement codées MPEG-2 (Moving Picture Experts Group).

6. Procédé selon la revendication 5, dans lequel ladite trame non prédictive est une trame I.

7. Procédé selon la revendication 5, dans lequel ladite trame prédictive est une trame P.

8. Procédé pour recevoir des données de service compressées émises par une source de données sur un réseau de distribution, le flot de données de service comprenant à la fois des trames de données prédictives et non prédictives d'un type de données commun, **caractérisé en ce que** le procédé consiste à :
- vérifier si un décodage correct du flot de données est irréalisable (1016),
- si c'est le cas, indiquer à la source de données un besoin de recevoir une nouvelle trame de données non prédictive (1018, 1020),
- autrement, recevoir seulement les trames de données prédictives de sorte que la trame de données non prédictive n'est reçue que lors de l'occurrence de l'événement prédéterminé.

9. Procédé selon la revendication 8, dans lequel ladite vérification comprend au moins l'un : de l'inspection d'un état de mémoire tampon, de l'inspection d'une fin de comptage d'un registre d'horloge, du calcul d'une valeur de somme de contrôle, de la vérification de la structure de données reçue, de l'inspection d'une valeur de paramètre incluse dans les données reçues ou déterminée sur la base de celles-ci.

10. Procédé selon la revendication 8, dans lequel ledit service est sensiblement au moins l'un : d'un service large bande numérique, d'un service de diffusion numérique et d'un service DVB (diffusion vidéonumérique).

11. Procédé selon l'une quelconque des revendications 8 à 10, dans lequel lesdites données de service compressées comprennent des données d'image vidéo.

12. Procédé selon la revendication 11, dans lequel lesdites données d'image vidéo sont sensiblement codées MPEG-2 (Moving Picture Experts Group).

13. Dispositif capable (1208) de recevoir des données de service envoyées par une source de données sur un réseau de distribution et d'émettre des données vers ladite source de données, le flot de données de service comprenant à la fois des trames prédictives et non prédictives d'un type de données commun, ledit dispositif comprenant des moyens de traitement (1202) et de mémorisation (1204) pour traiter et mémoriser des instructions et des données, **caractérisé en ce que** le dispositif est configuré pour vérifier si un décodage correct du flot de données de service est irréalisable et, si c'est le cas, pour émettre une indication vers ladite source de données afin de recevoir une nouvelle trame de données non prédictive, autrement, le dispositif est configuré pour recevoir seulement les trames de données prédictives de sorte que la trame de données non prédictive n'est reçue que lors de l'occurrence de l'événement prédéterminé.

14. Dispositif selon la revendication 13, dans lequel ladite vérification comprend au moins l'un : de l'inspection d'un état de mémoire tampon, de l'inspection d'une fin de comptage d'un registre d'horloge, du calcul d'une valeur de somme de contrôle, de la vérification de la structure de données reçue et de l'inspection d'une valeur de paramètre incluse dans les données reçues ou déterminée sur la base de celles-ci.

15. Dispositif selon la revendication 13, dans lequel ledit service est sensiblement au moins l'un : d'un service large bande numérique, d'un service de diffusion numérique et d'un service DVB (diffusion vidéonumérique).

16. Dispositif selon l'une quelconque des revendications 13 à 15, dans lequel lesdites données de service compressées comprennent des données d'image vidéo.

17. Dispositif selon la revendication 16, dans lequel lesdites données d'image vidéo sont sensiblement codées MPEG-2 (Moving Picture Experts Group).

18. Dispositif selon la revendication 13, qui est sensiblement au moins l'un : d'un IRD (récepteur décodeur intégré) et d'un boîtier décodeur de télévision.

19. Dispositif capable (1108) d'émettre des données de service sur un réseau de distribution vers un équipement terminal et de recevoir des informations de commande envoyées par l'équipement terminal concernant ledit service, les données de service comprenant à la fois des trames de données prédictives et non prédictives d'un type de données commun, ledit dispositif comprenant des moyens de traitement (1102) et de mémorisation (1104) pour traiter et mémoriser des instructions et des données, **caractérisé en ce que** le dispositif est configuré pour surveiller une occurrence d'un événement prédéterminé, auquel cas il est également configuré pour émettre une trame non prédictive dudit type de données commun vers l'équipement terminal afin de permettre à l'équipement terminal de se synchroniser avec le flot de données, autrement, il est configuré pour émettre seulement les trames prédictives dans le flot de données de service vers l'équipement terminal de sorte que la trame de données non prédictive est configurée pour n'être émise que lors de l'occurrence de l'événement prédéterminé.

20. Dispositif selon la revendication 19, dans lequel ledit événement est sensiblement au moins l'un : de la réception d'une demande de trame non prédictive ou d'une indication de celle-ci, de l'absence de réception d'un message d'acquittement pendant la période de surveillance, de la réception d'un message avec un certain paramètre indiquant un besoin d'émettre une trame non prédictive, de la réception d'un message avec une valeur de paramètre indiquant un besoin d'émettre une trame non prédictive et de l'établissement ou l'initialisation d'une connexion de transfert de données.

21. Dispositif selon la revendication 19, dans lequel ledit service est sensiblement au moins l'un : d'un service large bande numérique, d'un service de diffusion numérique et d'un service DVB (diffusion vidéonumérique).

22. Dispositif selon l'une quelconque des revendications 19 à 21, dans lequel lesdites données de service comprennent des données d'image vidéo.

23. Dispositif selon la revendication 22, dans lequel lesdites données d'image vidéo sont sensiblement codées MPEG-2 (Moving Picture Experts Group).

24. Dispositif selon l'une quelconque des revendications 19 à 23, qui est sensiblement un serveur.

25. Programme d'ordinateur comprenant des moyens formant code pour exécuter les étapes de procédé des revendications 1 à 8.

26. Support supportant le programme exécutable par un ordinateur de la revendication 25.
